# EUROPEAN PATENT APPLICATION

(11) **EP 2 996 080 A1**
(43) Date of publication of application: **16.03.2016**
(21) Application number: 14885850.9
(22) Date of filing: 15.07.2014
(51) Int. Cl.: G06Q 20/40

(54) **CARD SETTLEMENT TERMINAL AND CARD SETTLEMENT SYSTEM**

(71) Applicant: Brainy Inc., Naha-shi, Okinawa 900-0006 (JP)
(72) Inventor: TANAKA, Masashi, Naha-shi Okinawa 900-0006 (JP)
(74) Representative: Rehmann, Thorsten
(86) International application number: PCT/JP2014/068788
(87) International publication number: WO 2016/009494

(57) **Abstract**

A card payment device includes a payment acceptor accepting a card payment amount using a card, card data reader reading card data including a card identifier, biometric-data acquirer acquiring user's first biometric data and processor. When second biometric data is included in the card data, the processor executes biometric authentication based on the first and second biometric data. The processor generates first payment data including the card identifier, payment amount and first biometric data, and transmits the first payment data to a server, when the first biometric data is acquired and the second biometric data is not acquired. The processor generates second payment data including the card identifier, the payment amount and an authentication success notice, and transmits the second payment data to the server, when the first and second biometric data are acquired and the biometric authentication succeeds.

## Description

### Technical Field

A present invention relates to a card payment device and a card payment system executing biometric authentication.

### Background Art

Illegal use of credit cards, such as use of a fake signature, analysis of a password, skimming, card counterfeiting, or unapproved use by a relative, is increasing.

In card payment, there is a method of detecting and preventing illegal use of a card, based on patterning of contents of use, or by scoring based on the number of times of use, intervals of use, used stores, purposes of use, credit balance, etc.

Current credit cards do not store biological data. When biometric authentication is performed in a current card payment system, it is not executed at a card terminate device, but is executed in a server of an issuer (card issuer).

Further, as an example of a system for confirming a user based on biometric authentication, there is an automatic teller's machine (ATM) that performs balance inquiry of bank deposits and postal savings, account activity, transfer processing, etc. In such a bank system, although the ATM acquires biometric data, biometric authentication is performed by a server of a bank.

### Summary of Invention

### Technical Problems

As mentioned above, current credit cards do not store biometric data, and biometric authentication is performed in the server of the issuer in the current card payment system. Thus, when biometric authentication is performed by the server of the issuer, it is necessary to transmit biometric data of a card user, acquired at the time of payment, from a card payment device to the issuer's server. It is also necessary to execute biometric authentication based on biometric data received by the issuer's server, and biometric data pre-stored when a card was issued. Because of this, an increase may occur in a load of the issuer's server, in the amount of communication between the card payment device and the issuer's server, and in a latency period until authentication of a card user finishes.

The same can be applied to a bank system. Since biometric data of a user acquired by an ATM is transmitted to the server of a bank, and biometric authentication is executed by the server of the bank, a great load is exerted on the server of the bank. Moreover, since same biometric data is not mutually utilized between different banks, and different types of biometric data unique to the banks are used therein, it is difficult to perform effective use of biometric data and biometric authentication.

The present invention has been developed in view of the above circumstances, and aims to provide a card payment device and a card payment system capable of efficiently preventing illegal use of card payment by executing biometric authentication by the card payment device.

### Solution to the Problems

A card payment device according to an embodiment of a present invention includes a payment acceptance unit, a card data read unit, a biometric-data acquisition unit, and a processing unit. The payment acceptance unit accepts an amount of payment using a card. The card data read unit reads card data stored in the card and including card identification information. The biometric-data acquisition unit acquires first biometric data of a user who performs payment using the card. The processing unit executes biometric authentication based on the first biometric data acquired by the biometric-data acquisition unit, and second biometric data included in the card data, when the second biometric data compared with the first biometric data is included in the card data. The processing unit generates first payment data including the card identification information, the amount of payment and the first biometric data when the first biometric data is acquired and the second biometric data is not acquired, and transmits the first payment data to a server. The processor generates second payment data including the card identification information, the amount of payment and an authentication success notice when the first biometric data and the second biometric data are acquired and the biometric authentication succeeds, and transmits the second payment data to the server. The processor terminates transaction when the first biometric data is not acquired or when the biometric authentication fails.

### Advantage of Invention

According to the invention, illegal use of card payment can be prevented, by executing biometric authentication by the card payment device.

### Brief Description of Drawings

FIG. 1 is a block diagram showing an example of configuration of a card payment device according to a present embodiment.
FIG. 2 is a flowchart showing an example of processing by the card payment device.
FIG. 3 is a flowchart showing an example of biometric authentication.
FIG. 4 is a block diagram showing an example of configuration of a card payment system, and data transmission/reception states assumed when biometric authentication is succeeded in the card payment device.
FIG. 5 is a block diagram showing an example of the configuration of the card payment system, and data transmission/reception states assumed when biometric authentication is succeeded in a computer system of an acquirer (card payment enterprise).
FIG. 6 is a block diagram showing an example of the configuration of the card payment system, and data transmission/reception states assumed when biometric authentication is succeeded in a computer system of a card brand.
FIG. 7 is a block diagram showing an example of the configuration of the card payment system, and data transmission/reception states assumed when biometric authentication is succeeded in a computer system of an issuer.
FIG. 8 is a flowchart showing an example of the biometric authentication executed by the computer system of the acquirer and the computer system of the card brand.
FIG. 9 is a flowchart showing an example of the biometric authentication executed by the computer system of the issuer.

### Description of Embodiments

An embodiment of a present invention will be described with reference to the accompanying drawings. In the descriptions below, similar reference numbers denote elements similar in function and structure, and duplicate descriptions will be given only when necessary.

In the present embodiment, a description will be given of a card payment system including a card payment device that executes biometric authentication.

In the present embodiment, a case where a credit card is used as a card storing biometric data used for biometric authentication is described as an example. However, as the card storing biometric authentication data, various types of cards used for payment, such as a debit card and an electronic money card, may be used.

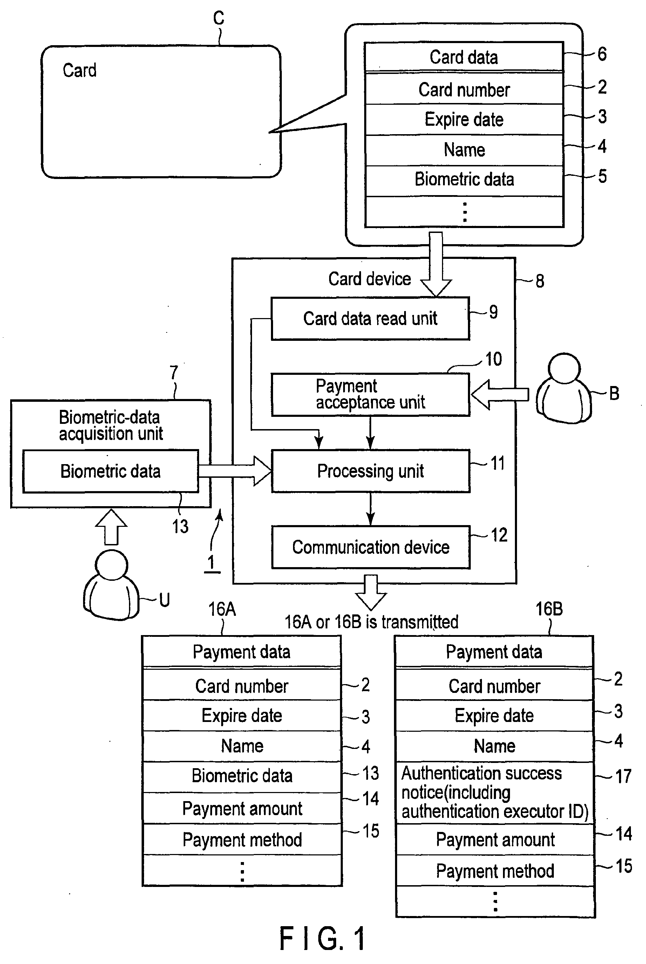

FIG. 1 is a block diagram showing an example of configuration of a card payment device according to the present embodiment.

In the present embodiment, a card C of a user U stores, for example, card data 6 that includes a card number 2 as an example of card identification information, an expire date 3, a name 4, and biometric data 5, etc. The card data 6 is already stored in the card C when, for example, the card is issued. As biometric data 5, a fingerprint pattern, an iris pattern or a vein pattern is used, for example. Biometric data 5 is compared in biometric authentication with biometric data 13 of the user U acquired at the time of payment.

For instance, the card data 6 is stored at least one of magnetic information of the card C, and information of integrated circuit (IC) chip of the card C. In the present embodiment, biometric data 5 is assumed to be stored in the IC chip of the card C.

A card payment device 1 includes a biometric-data acquisition unit 7 and a card device 8. The card payment device 1 includes a card data read unit 9, a payment acceptance unit 10, a processing unit 11 and a communication device 12.

Although a case where the card payment device 1 is installed in a member store of a card payment service is described as an example in the present embodiment, the card payment device 1 may be another type of device that can acquire biometric data 5 of the user U and the card data 6 of the card C. For instance, the card payment device 1 may be an information processing device including a biometric-data acquisition function, a card data read function, a payment acceptance function, a biometric authentication function and a communication function. Each function of the information processing device may be realized by software, hardware, or cooperation of software and hardware. Hardware needed to realize each function of the information processing device may be built therein, or may be externally attached to the information processing device. Purchase of a product or a service according to the present embodiment, may be performed at a store or at an electronic commerce site or service providing site on a network. As the information processing device, a cellular phone, a personal computer, a tablet computer, etc., may be used.

The payment acceptance unit 10 accepts an amount of payment, a payment method (for example, single payment or divided payment), etc., in accordance with an operation by, for example, a salesclerk B of the member store, etc., and sends the amount of payment and the payment method to the processing unit 11.

The card data read unit 9 reads the card data 6 stored in the card C of the user U, and sends the card data 6 to the processing unit 11.

The biometric-data acquisition unit 7 acquires biometric data 13 of the user U at the time of card payment, and sends the biometric data 13 to the processing unit 11 in the card device 8.

The processing unit 11 determines whether biometric data 13 of the user U at the time of payment is read by the biometric-data acquisition unit 7.

Further, the processing unit 11 determines whether biometric data 5 is included in the card data 6 read by the card data read unit 9.

Furthermore, the processing unit 11 performs biometric authentication (collation) based on biometric data 5 in the card C, and biometric data 13 of the user U at the time of payment.

If biometric data 13 of the user U at the time of payment is read, and if biometric data 5 is not included in the card data 6, the processing unit 11 generates payment data 16A including the card number 2, the expire date 3, the name 4, biometric data 13 of the user U at the time of payment, a payment amount 14 and a payment method 15, based on the card data 6, the payment amount, the payment method, and biometric data 13 of the user U at the time of payment.

In contrast, if biometric data 13 of the user U at the time of payment is read by the biometric-data acquisition unit 7, biometric data 5 included in the card data 6 is acquired, and biometric authentication based on biometric data 5 in the card C and biometric data 13 of the user U at the time of payment is succeeded, the processing unit 11 generates payment data 16B including the card number 2, the expire date 3, the name 4, an authentication success notice 17, the payment amount 14 and the payment method 15, based on the card data 6, the payment amount and the payment method.

The authentication success notice 17 includes authentication executor ID (identification information) which identifies an executor having executed the biometric authentication. If in the processing unit 11, biometric authentication is succeed, the authentication executor ID may be, for example, identification information of the member store that uses the card payment device 1, identification information of the card payment device 1, or identification information of an account of the member store.

If biometric data 13 of the user U at the time of payment is not read by the biometric-data acquisition unit 7, or if biometric authentication based on biometric data 5 in the card C and biometric data 13 of the user U at the time of payment is failed, the processing unit 11 determines termination of transaction, based on biometric authentication failure.

Upon generating payment data 16A or 16B, the processing unit 11 sends payment data 16A or 16B to the communication device 12.

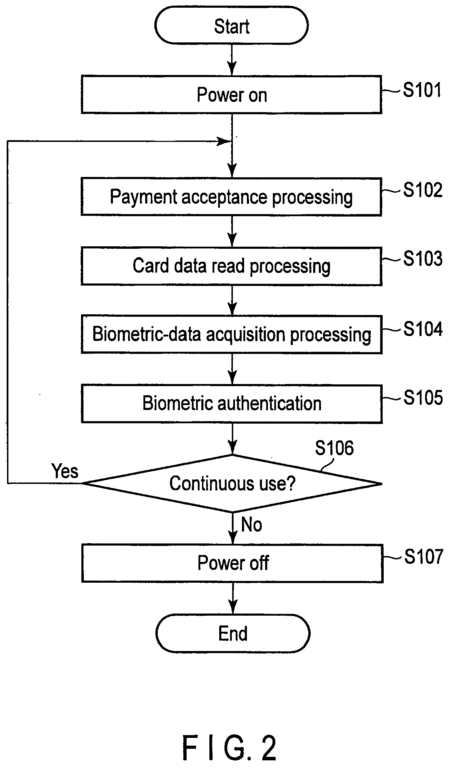

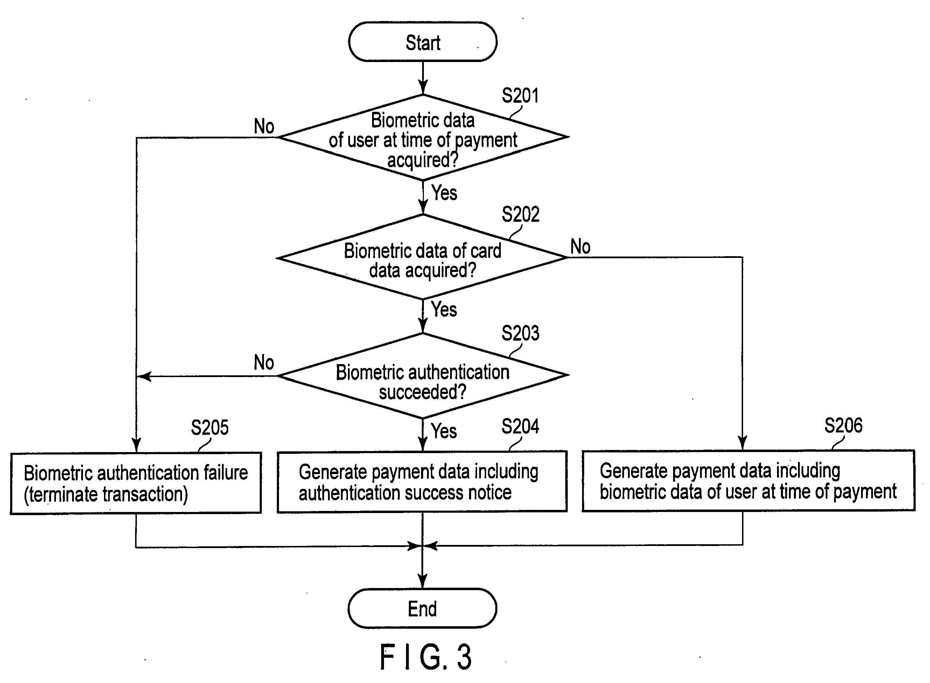

Examples of the above-mentioned processing by the processing unit 11 will be described later with reference to FIGS. 2 and 3.

The communication device 12 transmits payment data 16A or 16B to a server of an issuer as a destination via a network. The communication device 12 may transmit payment data 16A or 16B to the server of the issuer via at least one of a server of an acquirer and a server of a card brand.

FIG. 2 is a flowchart showing an example of processing by the card payment device 1.

In step S101, the card payment device 1 of the member store is turned on, and the biometric-data acquisition unit 7 and the card device 8 become a standby state.

In step S102, the card payment device 1 executes payment acceptance processing using the payment acceptance unit 10. For instance, in the payment acceptance processing, an amount of payment and a method of payment associated with an article of commerce or a service is accepted.

In step S103, the card payment device 1 executes card-data read processing using the card data read unit 9. For example, in the card-data read processing, a data storage area for the card data 6 is initialized, and reading of the card data 6 is executed. If the card data 6 is read, the card data 6 is stored in the data storage area allocated to the card data 6. For instance, if reading of the card data 6 failed a predetermined number of times, for example, three times, an error is displayed.

In step S104, the card payment device 1 executes biometric-data acquisition processing using the biometric-data acquisition unit 7. For example, in the biometric-data acquisition processing, a data storage area for biometric data 13 of the user U at the time of payment is initialized, and acquisition of biometric data 13 is executed. If biometric data 13 is acquired, biometric data 13 is stored in the data storage area allocated to biometric data 13. For example, if acquisition of biometric data 13 failed a predetermined number of times, for example, three times, an error is displayed.

In step S105, the card payment device 1 executes biometric authentication, based on the payment acceptance, the card data 6, and the biometric data 13 at the time of payment. Based on a result of biometric authentication, generation of payment data 16A, generation of payment data 16B, or termination of transaction is executed.

In step S106, if the card payment device 1 is continuously used, the processing returns to step S102.

In contrast, if the card payment device 1 is not continuously used, the card payment device 1 is turned off in step S107.

FIG. 3 is a flowchart showing an example of biometric authentication.

In step S201, the processing unit 11 determines whether biometric data 13 of the user U at the time of payment is acquired.

If biometric data 13 of the user U at the time of payment is not acquired, the processing proceeds to step S205.

If biometric data 13 of the user U at the time of payment is acquired, the processing unit 11 determines, in step S202, whether biometric data 5 in the card data 6 is acquired.

If biometric data 5 in the card data 6 is not acquired, the processing proceeds to step S206.

If biometric data 5 in the card data 6 is acquired, the processing unit 11 determines, in step S203, whether biometric authentication is succeeded, based on biometric data 5 in the card data 6, and biometric data 13 of the user U at the time of payment.

If the biometric authentication is succeeded, the processing unit 11 generates, in step S204, payment data 16B that includes the authentication success notice 17 including the authentication executor ID.

If biometric data 13 of the user U at the time of payment is not acquired in step S201, or if the biometric authentication is not succeeded in step S203, the processing unit 11 outputs, in step S205, data designating failure of the biometric authentication and terminates the transaction.

If biometric data 5 in the card data 6 is not acquired in step S202, the processing unit 11 generates, in step S206, payment data 16A including biometric data 13 of the user U at the time of payment.

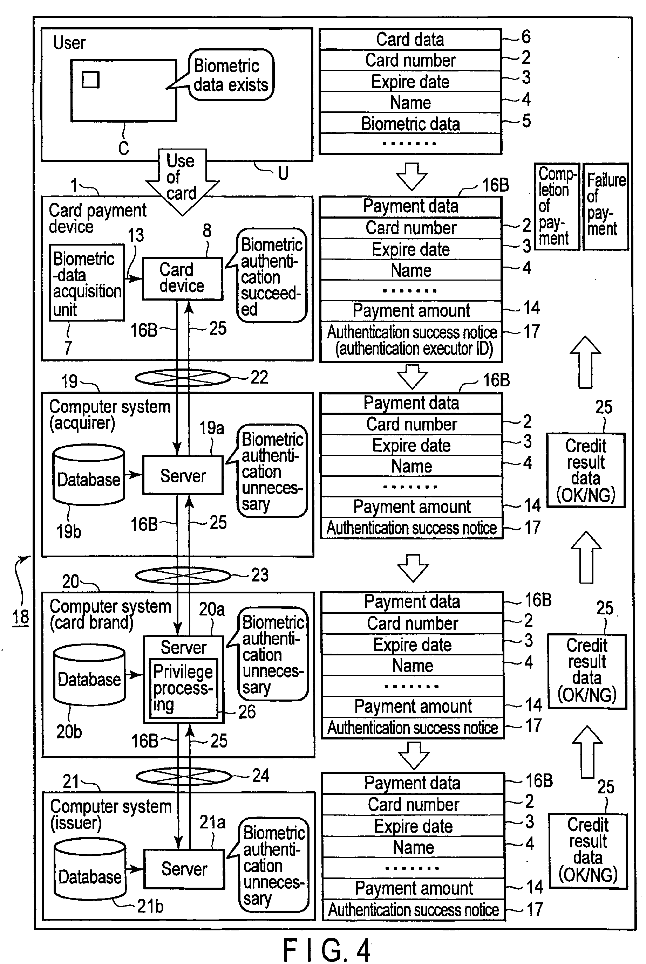

Referring now to FIGS. 4 to 7, a description will be given of a card payment system including the card payment device according to the present embodiment.

As shown, a card payment system 18 includes the card payment device 1, a computer system 19 of an acquirer, a computer system 20 of a card brand, and a computer system 21 of an issuer.

The card payment device 1 and the computer system 19 of the acquirer can transmit and receive data through a network 22. The computer system 19 of the acquirer and the computer system 20 of the card brand can transmit and receive data through a network 23. Further, the computer system 20 of the card brand and the computer system 21 of the issuer can transmit and receive data through a network 24.

The computer system 19 of the acquirer includes a server 19a and a database 19b.

The computer system 20 of the card brand includes a server 20a and a database 20b.

The computer system 21 of the issuer includes a server 21a and a database 21b.

FIG. 4 is a block diagram showing a configuration example of the card payment system 18, and data transmission/reception states assumed when biometric authentication is succeeded in the card payment device

If the biometric authentication is succeeded in the card payment device 1, the card payment device 1 transmits payment data 16B including the authentication success notice 17 including the authentication executor ID to the computer system 19 of the acquirer via the network 22. In the example of FIG. 4, the authentication executor ID designates, for example, the member store.

Since payment data 16B received from the card device 1 via the network 22 includes the authentication success notice 17, the computer system 19 of the acquirer executes various types of necessary processing without executing biometric authentication, and transmits payment data 16B to the computer system 20 of the card brand via the network 23.

Since payment data 16B received from the computer system 19 of the acquirer via the network 23 includes the authentication success notice 17, the computer system 20 of the card brand executes various types of necessary processing without executing biometric authentication, and transmits payment data 16B to the computer system 21 of the issuer via the network 24.

Since payment data 16B received from the computer system 20 of the card brand via the network 24 includes the authentication success notice 17, the computer system 21 of the issuer executes various types of necessary processing, such as credit processing and payment processing, without executing biometric authentication, and transmits credit result data 25 to the card payment device 1 via the network 24, the computer system 20 of the card brand, the network 23, the computer system 19 of the acquirer, and the network 22.

The computer system 20 of the card brand and the computer system 19 of the acquirer may execute various types of necessary processing based on the credit result data 25.

The card payment device 1 outputs data designating completion of payment or failure of payment, based on the credit result data 25.

In the present embodiment, when received payment data 16B includes the authentication success notice 17, server 20a of the computer system 20 of the card brand executes privilege processing 26 on at least one of a person (the member store in the example of FIG. 4) designated by the authentication executor ID in the authentication success notice 17, and the user U.

Privilege that the authentication executor can receive includes, for example, addition of a bonus point, or an increase in the amount of money (commission) received by the authentication executor.

Privilege that the user U can receive includes, for example, addition of point, or discount service.

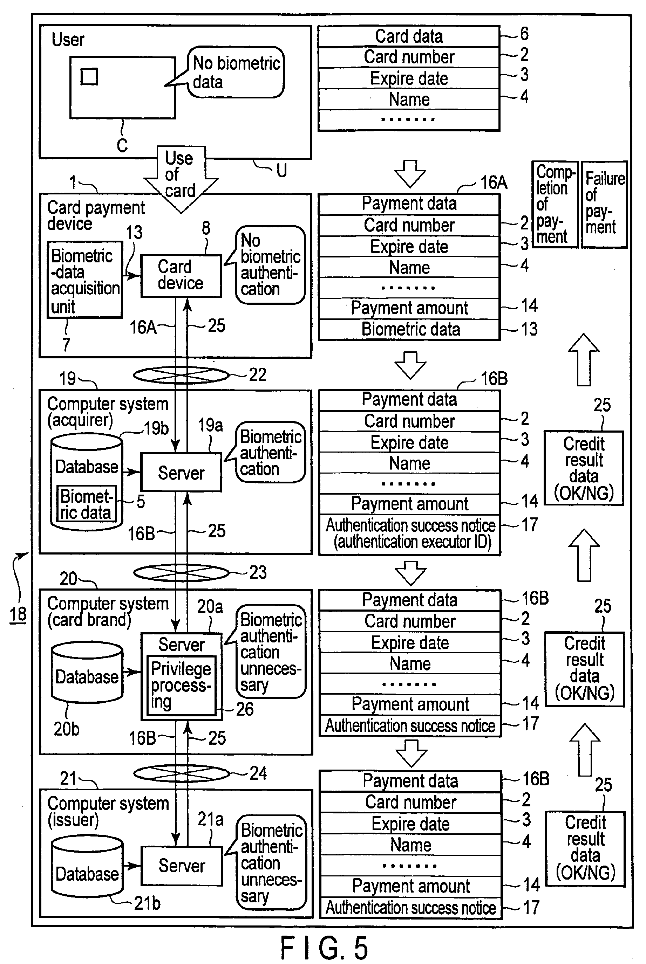

FIG. 5 is a block diagram showing an example of the configuration of the card payment system 18, and data transmission/reception states assumed when biometric authentication is succeeded in computer system 19 of the acquirer.

In FIG. 5, the card C does not store biometric data 5 which was registered at the time of issuing the card, and is compared with biometric data 13 of the user U acquired at the time of payment. Biometric data 5 compared with biometric data 13 of the user U at the time of payment is stored in database 19b of the computer system 19 of the acquirer.

In this case, the card payment device 1 transmits payment data 16A, which includes biometric data 13 of the user U acquired at the time of payment, to the computer system 19 of the acquirer via the network 22.

The computer system 19 of the acquirer performs biometric authentication, based on biometric data 5 in database 19b and biometric data 13 in payment data 16A, if payment data 16A received from the card payment device 1 via the network 22 includes biometric data 13.

If the biometric authentication is succeeded in the computer system 19 of the acquirer, the computer system 19 of the acquirer transmits payment data 16B, which includes the authentication success notice 17 including the authentication executor ID, to the computer system 20 of the card brand via the network 23. In the example of FIG. 5, the authentication executor ID designates the acquirer.

Since subsequent processing in FIG. 5 is similar to that of FIG. 4, its description is omitted.

In the example of FIG. 5, server 20a of the computer system 20 of the card brand executes processing of providing privilege to an executor (acquirer) designated by the authentication executor ID included in the authentication success notice 17 in received payment data 16B.

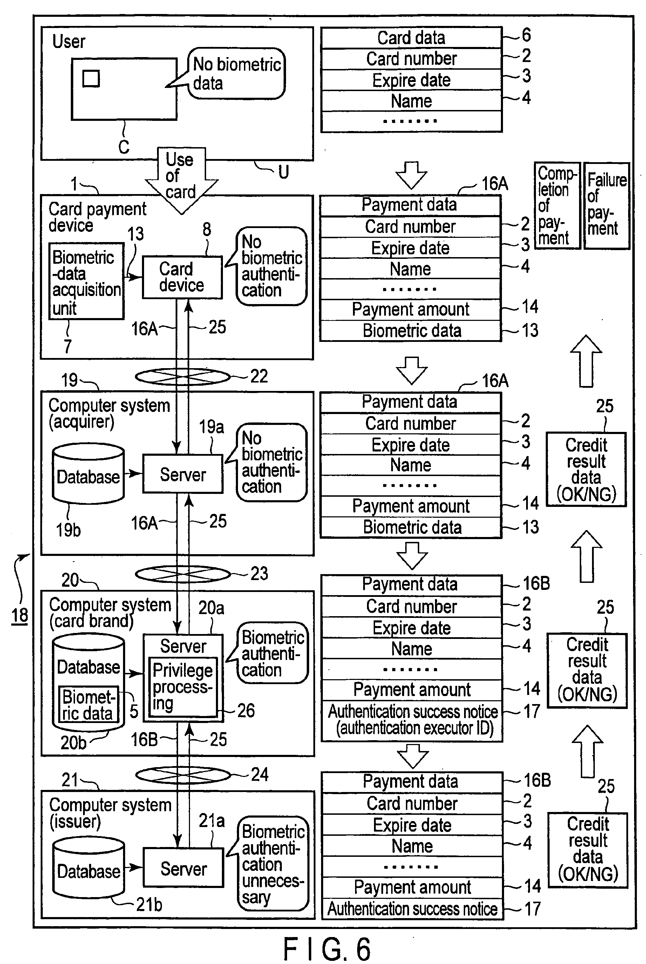

FIG. 6 is a block diagram showing an example of the configuration of the card payment system 18, and data transmission/reception states assumed when biometric authentication is succeeded in the computer system 20 of the card brand.

In FIG. 6, biometric data 5, which was registered when the card was issued, and is compared with biometric data 13 of the user U acquired at the time of payment, is not stored in the card C and is not stored in database 19b of the computer system 19 of the acquirer. Biometric data 5 compared with biometric data 13 of the user U at the time of payment is stored in database 20b of the computer system 20 of the card brand.

In FIG. 6, the card payment device 1 transmits, to the computer system 19 of the acquirer via the network 22, payment data 16A including biometric data 13 of the user U at the time of payment.

The computer system 19 of the acquirer transmits payment data 16A to the computer system 20 of the card brand via the network 23, without executing biometric authentication.

If payment data 16A received from the computer system 19 of the acquirer via the network 23 includes biometric data 13, the computer system 20 of the card brand executes biometric authentication, based on biometric data 5 in database 20b and biometric data 13 in payment data 16A.

If the biometric authentication is succeeded in the computer system 20 of the card brand, the computer system 20 of the card brand transmits, to the computer system 21 of the issuer via the network 24, payment data 16B including the authentication success notice 17 that includes the authentication executor ID. In the example of FIG. 6, the authentication executor ID designates the card brand. Since server 20a can recognize that an executor of the biometric authentication is the card brand, the authentication executor ID may not be included in the authentication success notice 17.

Since the subsequent processing in FIG. 6 is similar to that of FIG. 4, its description is omitted.

In the example of FIG. 6, since an executor of the biometric authentication is the card brand, server 20a of the computer system 20 of the card brand executes processing of providing privilege to the card brand.

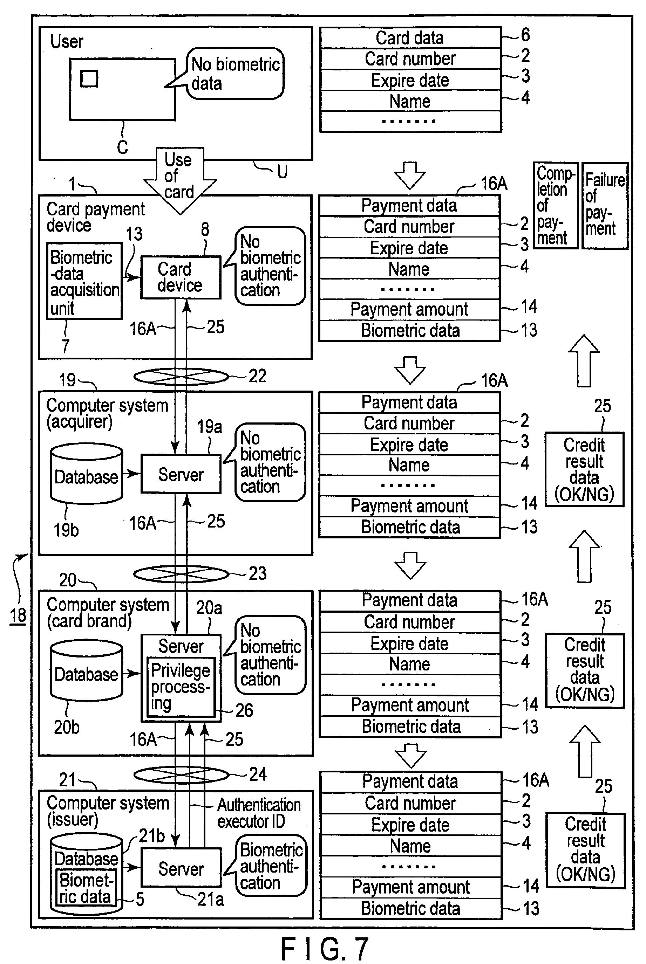

FIG. 7 is a block diagram showing an example of the configuration of the card payment system 18, and data transmission/reception states assumed when biometric authentication is succeeded in the computer system 21 of the issuer.

In FIG. 7, biometric data 5, which is compared with biometric data 13 of the user U at the time of payment, is not stored in the card C, database 19b of the computer system 19 of the acquirer, and database 20b of the computer system 20 of the card brand. Biometric data 5, which was registered when the card was issued, and is compared with biometric data 13 of the user U acquired at the time of payment; is stored in database 21b of the computer system 21 of the issuer.

In this case, the card payment device 1 transmits, to the computer system 19 of the acquirer via the network 22, payment data 16A including biometric data 13 of the user U at the time of payment.

The computer system 19 of the acquirer transmit payment data 16A to the computer system 20 of the card brand via the network 23, without executing biometric authentication.

The computer system 20 of the card brand transmits payment data 16A to the computer system 21 of the issuer via the network 24, without executing biometric authentication.

If payment data 16A received from the computer system 20 of the card brand via the network 24 includes biometric data 13, the computer system 21 of the issuer performs biometric authentication, based on biometric data 5 in database 21b and biometric data 13 in payment data 16A.

If the biometric authentication is succeeded in the computer system 21 of the issuer, the computer system 21 of the issuer executes various types of necessary processing including credit processing, payment processing, etc.

The computer system 21 of the issuer transmits the credit result data 25 to the card payment device 1 via the network 24, the computer system 20 of the card brand, the network 23, the computer system 19 of the acquirer, and the network 22.

The card payment device 1 outputs data designating completion of payment or failure of payment, based on the credit result data 25.

Moreover, if the biometric authentication is succeeded in the computer system 21 of the issuer, the computer system 21 of the issuer supplies the computer system 20 of the card brand with the authentication executor ID via the network 24. In the example of FIG. 7, the authentication executor ID designates the issuer.

Upon receiving the authentication executor ID from the computer system 21 of the issuer, server 20a of the computer system 20 of the card brand executes privilege processing 26 of providing privilege to an executor (issuer) designated by the authentication executor ID.

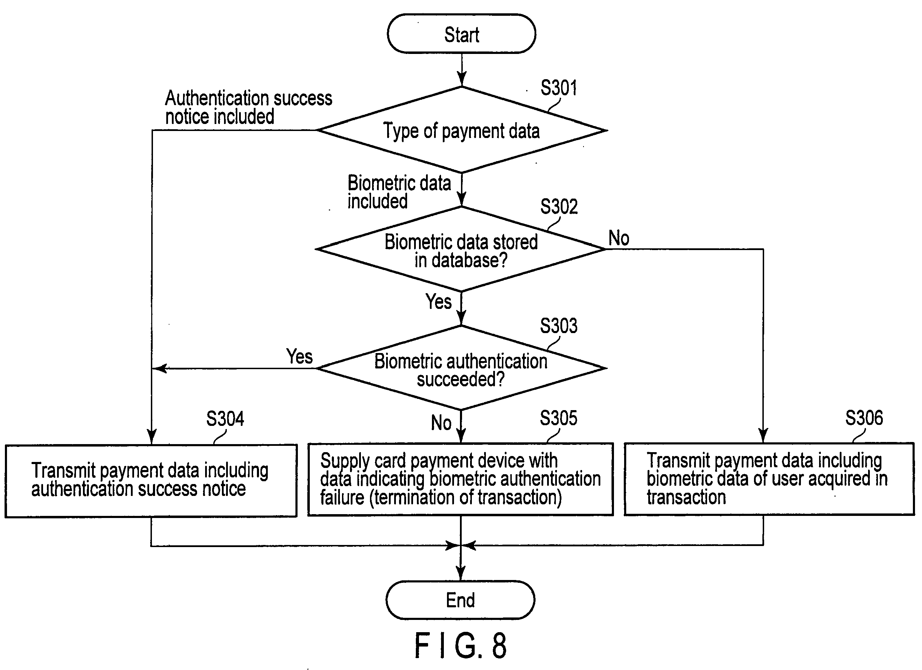

FIG. 8 is a flowchart showing an example of the biometric authentication executed by the computer system 19 of the issuer and the computer system 20 of the card brand.

In step S301, server 19a (20a) determines whether received payment data is payment data 16A including biometric data 13, or payment data 16B including the authentication success notice 17.

If the received payment data is payment data 16B including the authentication success notice 17, the processing proceeds to step S304.

If the received payment data is payment data 16A including biometric data 13, server 19a (20a) determines, in step 302, whether biometric data 5 compared with biometric data 13 of the user U at the time of payment is stored in database 19b (20b).

If biometric data 5 is not stored in database 19b (20b), the processing proceeds to step S306.

If biometric data 5 is stored in database 19b (20b), server 19a (20a) executes, in step S303, biometric authentication based on biometric data 13 in payment data 16A and biometric data 5 in database 19b (20b).

If it is determined in step S301 that the received payment data is payment data 16B including the authentication success notice 17, or if biometric authentication is succeed in step 303, server 19a (20a) transmits, in step S304, payment data 16B including the authentication success notice 17 to next computer system 20 (21). The authentication success notice 17 includes the authentication executor ID designating the acquirer, if the executor of the biometric authentication is the acquirer. If the executor of biometric authentication is the card brand, the authentication success notice 17 may include the authentication executor ID designating the card brand.

If the biometric authentication is failed in step S303, server 19a (20a) supplies, in step S305, the card payment device 1 with data designating the biometric authentication failure.

If the biometric data 5 is not stored in database 19b (20b) in step S302, server 19a (20a) transmits, in step S306, payment data 16A including biometric data 13 of the user U at the time of payment to the next computer system 20 (21).

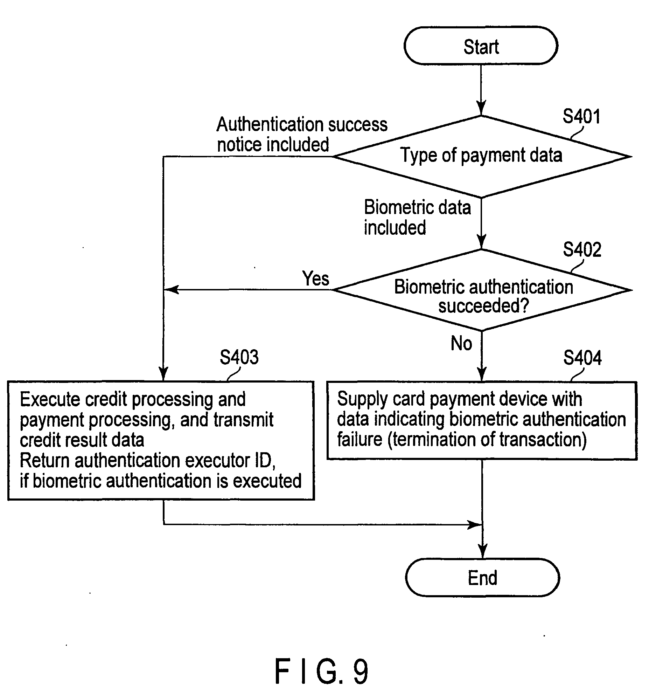

FIG. 9 is a flowchart showing an example of the biometric authentication executed by the the computer system 21 of the issuer.

In step S401, server 21a determines whether received payment data is payment data 16A including biometric data 13, or payment data 16B including the authentication success notice 17.

If the received payment data is payment data 16B including the authentication success notice 17, the processing proceeds to step S403.

If the received payment data is payment data 16A including biometric data 13, server 21a executes, in step S402, biometric authentication based on biometric data 13 in payment data 16A and biometric data 5 in database 21b.

If it is determined in step S401 that the received payment data is payment data 16B including the authentication success notice 17, or if the biometric authentication is succeeded in step S402, the server 21a executes credit processing and payment processing, generates the credit result data 25, and supplies the card payment device 1 with the credit result data 25 in step S403. Further, when server 21a is executed the biometric authentication, server 21a supplies the computer system 20 of the card brand with the authentication executor ID designating the issuer.

If the biometric authentication is failed in step S402, server 21a supplies, in step S404, the card payment device 1 with data designating the biometric authentication failure.

In the above-described embodiment, biometric data 5 is stored in the card C, the biometric-data acquisition unit 7 is installed in the card payment device 1, and biometric authentication is executed based on biometric data 5 in the card C, and biometric data 13 acquired by the biometric-data acquisition unit 7. With this structure, illegal use of card payment of the card C at the time of card payment can be prevented without greatly changing the computer systems 19 to 21 provided behind the card payment device 1.

In the present embodiment, it is not necessary to transmit biometric data 13 to the computer systems 19 to 21 provided behind the card payment device 1, if the biometric authentication is succeeded in card payment device 1. By virtue of this, communication traffic of the card payment system 18 can be suppressed, the amount of call/response between the card payment device 1 and the computer system 21 of the issuer can be reduced, the communication traffic can be suppressed, a speed of response can be enhanced, and a latency time until a completion of authentication of the user U can be suppressed.

In the present embodiment, the biometric authentication of a card user can be performed by any one of the devices ranging from the card payment device 1 to the computer system 21 of the issuer. As a result, illegal use of a card can be prevented, and processing for biometric authentication can be prevented from concentrating on each server 19a to 19c in the card payment system 18, i.e., load of servers 19a to 19c can be dispersed.

In the present embodiment, since biometric data 13 is transmitted and received among a plurality of different enterprises, biometric data 13 can be used effectively.

In the present embodiment, since biometric data 5 is not transmitted after biometric authentication succeeds, the number of times of transmission of biometric data 5 can be reduced, and biometric data 5 can be prevented from being illegally acquired by other people.

In the present embodiment, privilege is provided to at least one of an executor of biometric authentication and the user of the card C. Accordingly, the use of the biometric authentication in card payment can be promoted. In particular, introduction of the card payment device 1 can be promoted.

In the present embodiment, biometric data 5 may be encrypted. If the card payment device 1 is read encrypted biometric data 5, the card payment device 1 decrypts the encrypted biometric data 5, and performs biometric authentication based on the resultant decrypted biometric data 5 and biometric data 13. The same can be applied to biometric authentication performed by the computer systems 19 to 21. If biometric data 5 stored therein is encrypted, the computer systems 19 to 21 decrypt the encrypted biometric data 5 before biometric authentication.

Although in the embodiment, the privilege processing 26 is executed by the computer system 20 of the card brand, it may be executed by another computer system, such as the computer system 19 of the acquirer, or the computer system 21 of the issuer. Moreover, the privilege processing 26 may be executed by of a plurality of computer systems in cooperation.

The card payment system 18 according to the present embodiment may use, for example, electronic signature authentication based on a public key system, may encrypt data on a transmission side, and may decrypt data on a reception side. The electronic signature authentication can ensure the security of the card data 6 and biometric data 13 during a period from the time of input to the time of execution of biometric authentication and completion of payment. Communication of various types of data (for example, payment data 16A, payment data 16B, the authentication executor ID, etc.) in the card payment system 18 may be executed utilizing, for example, Secure Sockets Layer (SSL). This enhances securities of communications by the card payment system 18. In the card payment system 18, a unit for performing decryption does not perform decryption if it detects unjustness or incursion of a third party, if any. This protects data in security.

In the present embodiment, the computer systems 19 to 21 can be combined arbitrarily, and a part thereof may be omitted.

In the flowcharts of FIGS. 2, 3, 8 and 9, order of the steps may be changed arbitrarily within a range in which processing, such as biometric authentication, can be realization, and payment data 16A and 16B can be generated.

In the embodiment, payment data 16A and 16B may be each divided into a plurality of portions.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A card payment device comprising:
a payment acceptance unit which accepts an amount of payment using a card;
a card data read unit which reads card data stored in the card and including card identification information;
a biometric-data acquisition unit which acquires first biometric data of a user who performs payment using the card; and
a processing unit which executes biometric authentication based on the first biometric data acquired by the biometric-data acquisition unit, and second biometric data included in the card data, when the second biometric data compared with the first biometric data is included in the card data,
wherein
the processing unit
generates first payment data including the card identification information, the amount of payment and the first biometric data when the first biometric data is acquired and the second biometric data is not acquired, and transmits the first payment data to a server;
generates second payment data including the card identification information, the amount of payment and an authentication success notice when the first biometric data and the second biometric data are acquired and the biometric authentication succeeds, and transmits the second payment data to the server; and
terminates transaction when the first biometric data is not acquired or when the biometric authentication fails.

2. The card payment device of Claim 1, wherein the authentication success notice includes authentication executor identification information designating an executor of the biometric authentication.

3. A card payment system including the card payment device of Claim 1 and the server, wherein
the server
executes payment processing based on the card identification information and the amount of payment included in the second payment data, when receiving the second payment data from the card payment device;
executes biometric authentication in the server based on the first biometric data included in the first payment data and the second biometric data stored in a database, when receiving the first payment data from the card payment device;
executes the payment processing when the biometric authentication in the server is succeeded; and
terminates the transaction when the biometric authentication in the server is not succeeded.

4. The card payment system of Claim 3, wherein the authentication success notice includes authentication executor identification information designating an executor of the biometric authentication; and
the server executes processing of providing a privilege to the executor of the biometric authentication, based on the authentication executor identification information.

5. A card payment system including the card payment device of Claim 1, a first server as the server, and a second server, wherein
the first server
transmits the second payment data to the second server when receiving the second payment data from the card payment device;
executes biometric authentication in the first server when the first server receives the first payment data from the card payment device, and the second biometric data is stored in a first database as a database;
transmits the second payment data to the second server when the biometric authentication in the first server is succeeded;
terminates the transaction when the biometric authentication in the first server is not succeeded; and
transmits the first payment data to the second server when the first server receives the first payment data from the card payment device and the first database does not store the second biometric data,
the second server
executes payment processing based on the card identification information and the amount of payment included in the second payment data, when receiving the second payment data from the first server;
executes biometric authentication in the second server based on the first biometric data included in the first payment data and the second biometric data stored in a second database of the second server, when receiving the first payment data from the first server;
executes the payment processing when the biometric authentication in the second server is succeeded; and
terminates the transaction when the biometric authentication in the second server is not succeeded.

6. The card payment system of Claim 5, wherein the authentication success notice generated in the card payment device includes authentication executor identification information designating an executor of the biometric authentication;
the second server transmits the authentication executor identification information to the first server, when the biometric authentication in the second server is succeeded; and
the first server executes processing of providing a privilege to the executor of the biometric authentication, based on the authentication executor identification information.
